# FASCICULE DE BREVET EUROPEEN

(11) **EP 1 812 619 B1**
(45) Date de publication et mention de la délivrance du brevet: **22.09.2010**
(21) Numéro de dépôt: 04817213.4
(22) Date de dépôt: 12.10.2004
(51) Int. Cl.: C23C 18/12, C23C 24/04, C23C 18/16

(54) **PROCEDE D'OBTENTION D'UN MATERIAU COMPOSITE FERROELECTRIQUE**
VERFAHREN ZUR HERSTELLUNG EINES FERROELEKTRISCHEN VERBUNDWERKSTOFFS
METHOD FOR OBTAINING A COMPOSITE FERRO-ELECTRIC MATERIAL

(30) Priorité: 13.10.2003 FR 0311963; 16.10.2003 FR 0312086
(43) Date de publication de la demande: 01.08.2007
(73) Titulaire: CENTRE NATIONAL DE LA RECHERCHE SCIENTIFIQUE (CNRS), 75016 Paris (FR)
(72) Inventeur: CANSELL, François, Pierre, Michel, F-33600 Pessac (FR); AYMONIER, Cyril, Gérard, Jacques, F-33130 Begles (FR); HUBER, Christophe, Antoine, Stéphane, F-67204 Achenheim (FR); ELISSALDE, Catherine, Jocelyne, F-33130 Begles (FR); MAGLIONE, Mario, F-33850 Léognan (FR)
(74) Mandataire: Texier, Christian
(86) Numéro de dépôt international: PCT/FR2004/002580
(87) Numéro de publication internationale: WO 2005/038082

(56) Documents cités:
- US-A- 6 087 287
- US-B1- 6 337 032
- CABALLERO A C ET AL: "Dopant Distribution and Grain Growth Control in BaTiO3 Ceramics Doped with ZnO-SiO2-P2O5" JOURNAL OF THE EUROPEAN CERAMIC SOCIETY, ELSEVIER SCIENCE PUBLISHERS, BARKING, ESSEX, GB, vol. 17, no. 10, août 1997 (1997-08), pages 1223-1230, XP004217016 ISSN: 0955-2219
- CHEN R ET AL: "Structure, sintering behavior and dielectric properties of silica-coated BaTiO3" MATERIALS LETTERS, NORTH HOLLAND PUBLISHING COMPANY. AMSTERDAM, NL, vol. 54, no. 4, juin 2002 (2002-06), pages 314-317, XP004352999 ISSN: 0167-577X
- HUBER C.: "New application of the core-shell concept to ferroelectric nanopowders" JOURNAL OF MATERIALS CHEMISTRY, vol. 13, 2003, pages 650-653, XP002282524 cité dans la demande
- AZOUGH F ET AL: "A Transmission Electron Microscope Study of Commercial X7R-Type Multilayer Ceramic Capacitors" JOURNAL OF THE EUROPEAN CERAMIC SOCIETY, ELSEVIER SCIENCE PUBLISHERS, BARKING, ESSEX, GB, vol. 18, no. 7, 1 juillet 1998 (1998-07-01), pages 751-758, XP004124697 ISSN: 0955-2219

## Description

L'invention concerne le domaine des matériaux diélectriques entrant notamment dans la constitution de composants microélectroniques haute fréquence, tels que condensateurs, résonateurs, filtres accordables, lignes de propagation, déphaseurs, etc. ainsi que dans les antennes radar.

L'invention s'applique notamment aux composants présents dans les systèmes de télécommunication dont la fonction est l'émission, la réception et le filtrage des signaux.

Les matériaux utilisés sont généralement des matériaux composites comprenant un composé ferroélectrique et au moins un composé diélectrique à faibles pertes, généralement sous la forme d'un oxyde. La présence d'un composé diélectrique à faibles pertes améliore les propriétés électroniques du matériau ferroélectrique.

Ces matériaux peuvent être obtenus par des procédés céramiques classiques consistant à mélanger des poudres contenant une phase ferroélectrique et une phase diélectrique à faibles pertes. On pourra à cet égard se référer aux publications suivantes :

Alberta E. F., Guo R., Bhalla A. S., « Novel BST:MgTiO3 composites for frequency agile applications », Ferroelectrics, 2002, vol.268, p.169-174, ce document divulgue un matériau composite obtenu par mélange puis frittage de Ba₁₋ₓSrₓTiO₃ (BST) avec du MgTiO₃ (MT).

Xiong Z. X., Zhou X. J., Zen, W. Z., Baba-Khishi K. Z., Chen S. T., « Development of ferroelectric ceramics with high Dielectric constant and low dissipation factor for high-voltage capacitors », ce document divulgue un matériau composite formé à partir de BaTiO₃, BaZrO₃ et BaSnO₃ dopés avec MnSiO₃, WO₃, CeO₂, Bi₂(SnO₃)₃ et ZnO.

Certaines techniques d'obtention de ces matériaux consistent à former des particules de type « coeur-écorce ». Ces particules sont formées par enrobage de grains d'un composé ferroélectrique par une couche mince généralement de diélectrique. Elles sont ensuite frittées pour former un matériau dense.

Les techniques d'enrobage mises en oeuvre peuvent être des techniques d'enrobage par voie sol-gel. On pourra à cet égard se référer aux publications suivantes :

Liu X., Shin W.Y., Shih W.H., « Effects of copper coating on the crystalline structure of the fine barium titanate particles », Journal of the American Ceramic Society, 1997, 80 (11), p..2781-2788, ce document divulgue une technique d'enrobage de particules de BaTiO₃ par une couche de cuivre,

Harkulich T. M., Magder J., Vukasovich M. S., Lockhart R. J. « Ferroelectrics of ultrafine particle size: II, grain growth inhibition studies », Journal of the American Ceramic Society, 1966, 49(6), 295-9, ce document divulgue une technique d'enrobage de particules de BaTiO₃ par une couche d'oxyde de tantale,

Huber C., Treguer-Delapierre M., Elissalde C., Weill F., Maglione M., « New application of the core-shell concept to ferroelectric nanopowder », Journal of Materials Chemistry, 2003, 13, p. 650-653, ce document divulgue des particules nanométriques de Ba₁₋ₓSrₓTiO₃ enrobées par une couche de silice (SiO₂),

Yue Z., Wang X., Zhang L., Yao X., « Temperature stable Pb(Zn1/3Nb2/3)O3 - based composite ceramics prepared by particle-coating method », Journal of materials science letters, 1997, 16(6), p. 1354-1356, ce document divulgue des particules de céramique composite à base de Pb(Zn_{1/3}Nb_{2/3})O₃ enrobées d'une couche mince vitreuse de SiO₂-B₂O₃.

Lors de l'étape de frittage, la couche d'enrobage (écorce) qui entoure chaque particule ferroélectrique (coeur) empêche la croissance de ces particules. En effet, la couche d'enrobage isole les particules ferroélectriques les unes des autres et les empêche de se regrouper pour former des particules de plus grande taille. Les techniques d'enrobage permettent donc de mieux contrôler la taille des grains dans le matériau final et d'obtenir une répartition homogène des grains.

Les étapes d'enrobage et de frittage conduisent à l'obtention d'un matériau composite dense formé de particules ferroélectriques enrobées dans une matrice continue de composé diélectrique.

Caballero A C et AL, « Dopant Distribution and Grain Growth Control in BaTiO3 Ceramics doped with ZnO-SiO2-P2O5 » Journal of the European Ceramic Society, Elsevier Science Publishers, Barking, Essex, GB, Vol. 17, no 10, août 1997 (1997-08), pages 1223-1230, XP004217016 ISSN: 0955-2219, ce document divulgue une technique d'enrobage de BaTiO₃ par SiO₂, P₂O₅ et ZnO simultanément,

Chen R et Al, « Structure, sintering behaviour and dielectric properties of silica-coated BaTiO3 » Materials letters, North Holland Publishing Company. Amsterdam, NL, vol. 54, no. 4, Juin 2002 (2002-06), pages 314-317, XP004352999 ISSN: 0167-577X, ce document divulgue un procédé de frittage de BaTiO₃, enrobé par une couche de silice (SiO₂),

Chivukula et Al, US-B1-6 337 032, 8 janvier 2002 (2002-01-08), ce document divulgue un procédé de synthèse de particles de composé ferroélectrique.

Les propriétés électroniques recherchées sont une permittivité diélectrique et une accordabilité similaires à celles du composé ferroélectrique et une diminution de la sensibilité thermique et des pertes diélectriques. L'accordabilité est définie comme la variation relative de la permittivité du matériau en fonction du champ appliqué au matériau.

Un but de l'invention est de fournir une technique d'obtention d'un matériau composite diélectrique comprenant au moins un composé ferroélectrique et au moins un composé diélectrique à faibles pertes, permettant de contrôler de manière précise la structure du matériau composite obtenu.

Le contrôle de la structure du matériau composite permet la réalisation de composants agiles en fréquence. Le caractère agile du composant réside dans la possibilité de modifier sa réponse fréquentielle par le biais d'un champ électrique qui lui est appliqué.

A cet effet l'invention propose un procédé d'obtention d'un matériau composite ferroélectrique, tel que défini en revendication 1.

Dans le cadre de l'invention, on considère que le fluide contenant le solvant et le précurseur est sous pression lorsqu'il est maintenu à une pression supérieure à environ 10 bar (soit 10⁶ Pa).

De préférence, le fluide est maintenu à une température supérieure à 10°C.

Les conditions de température et de pression supercritiques sont définies par rapport à la pression et à la température au point critique du fluide sous forme pure ou de mélange. On considère que la température et la pression critique de ce fluide sont égales à la température et à la pression critique du solvant majoritaire.

La détermination des conditions de l'étape d'enrobage des particules du composé ferroélectrique en milieu fluide supercritique sous pression permet de contrôler avec précision les paramètres structurels du matériau final obtenu, et notamment l'épaisseur de la couche d'enrobage obtenue.

L'étape d'enrobage des particules du composé ferroélectrique sous pression conduit à l'obtention de particules enrobées dont la couche d'enrobage diélectrique est particulièrement « propre », c'est à dire contenant peu de radicaux résiduels en comparaison avec les techniques d'enrobage de l'art antérieur.

En outre, l'étape d'enrobage sous pression favorise l'étape ultérieure de frittage. En effet, dans le procédé de l'invention, l'étape d'enrobage conduit à l'obtention non seulement de particules enrobées (particules de type II) mais également de particules nanostructurées formées exclusivement du matériau d'enrobage (particules de type 1). Lors de l'étape de frittage, ces particules de type I se repartissent dans les interstices formés entre les particules enrobées.

L'expression « nanostructuré » définit un assemblage de particules de taille nanométrique, c'est à dire présentant des dimensions de l'ordre de quelques nanomètres.

Grâce à la présence de ces particules de type I et de la couche d'enrobage des particules de type II, il est possible d'obtenir un matériau composite final dense en appliquant une pression et/ou une température de frittage moins élevées que dans les procédés de l'art antérieur.

Le composé ferroélectrique utilisé peut être choisi parmi les matériaux suivants: PbTiO₃, PZT, PMN, LiNbO₃, KNbO₃, KTN, BaTᵢO₃, BaTiO₃-SrTiO₃.

Les particules de composé ferroélectrique sont par exemple constituées des matériaux suivants : BaₓSr₁₋ₓTiO₃ (BST) avec x compris entre 0 et 1, ou BaTᵢO₃.

Le matériau diélectrique d'enrobage peut être choisi notamment parmi les oxydes suivants : AL₂O₃, SiO₂, TiO₂, MgTiO₃, ZrO₂, HfO₂, SnO₂, SnO₃, Ta₂O₅.

Grâce au procédé de l'invention, des nitrures peuvent également être utilisés pour l'enrobage. L'enrobage par des nitrures n'était pas possible avec les techniques d'enrobage par voie sol-gel de l'art antérieur (qui ne permettent qu'un enrobage par des oxydes).

Le précurseur du composé diélectrique peut être choisi dans la famille des sels, des acétates, acétyle acétonates, alcoxydes et plus généralement dans la famille des complexes métalliques et organométalliques.

Le solvant utilisé peut avantageusement être du dioxyde de carbone CO₂ (dans le cas d'un enrobage aux oxydes) ou encore de l'ammoniac NH₃ (dans le cas d'un enrobage aux nitrures).

Le solvant peut également être choisi parmi les alcools, l'eau et leurs mélanges.

Dans une mise en oeuvre de l'invention, le procédé comprend en outre une étape préalable de synthèse des particules de composé ferroélectrique, cette synthèse étant réalisée sous pression. En outre, la synthèse des particules peut être réalisée à une température supérieure à 10°C.

De préférence, la synthèse est réalisée dans des conditions de température et de pression supercritiques.

Le procédé de l'invention permet d'obtenir un matériau composite final formé de particules ferroélectriques enrobées dans une matrice d'un composé diélectrique, dans lequel la matrice de composé diélectrique est formée de particules dont la taille peut varier en fonction de la température de frittage du nanomètre à quelques millimètres.

D'autres caractéristiques et avantages ressortiront encore de la description qui suit, laquelle est purement illustrative et non limitative et doit être lue en regard des figures annexées parmi lesquelles :
- la figure 1 représente schématiquement un exemple d'installation permettant de mettre en oeuvre l'étape d'enrobage du procédé de l'invention,
- la figure 2 est une image obtenue par microscopie électronique à balayage de particules de Ba_{0,6}Sr_{0,4}TiO₃ (BST) micrométriques avant enrobage,
- les figures 3A et 3B sont des images obtenues par microscopie électronique à balayage de particules de BST enrobées d'alumine obtenues respectivement en électrons secondaires (contraste topographique) et en électron rétrodiffusés (contraste chimique),
- la figure 4 est un diagramme représentant le profil de composition chimique d'une particule de BST enrobée d'alumine,
- la figure 5 est une image obtenue par microscopie électronique à balayage d'une coupe de matériau composite obtenu par frittage des particules de BST enrobées,
- la figure 6A représente l'évolution de la capacité de particules de BST enrobées avant frittage en fonction de la température et de la fréquence du signal qui leur est appliqué et la figure 6B représente l'évolution de la permittivité ε' d'une céramique de BST ne contenant pas d'alumine en fonction de la température et de la fréquence du signal qui lui est appliqué,
- la figure 7 représente l'évolution de la permittivité du matériau composite obtenu par frittage des particules de BST enrobées,
- les figures 8A et 8B représentent dans un diagramme tridimensionnel les variations du coefficient de pertes diélectriques tanδ respectivement pour une céramique classique de BST et pour le matériau composite BST/alumine fritté en fonction de la température et de la fréquence appliquée,
- la figure 9 représente dans un diagramme tridimensionnel les variations de l'accordabilité du matériau composite BST/alumine fritté en fonction de la température et du champ électrique appliqué, pour une fréquence de 100 kHz,
- la figure 10 représente les variations du coefficient de perte diélectrique tanδ du matériau composite BST/alumine en fonction du champ électrique, pour différentes fréquences appliquées.

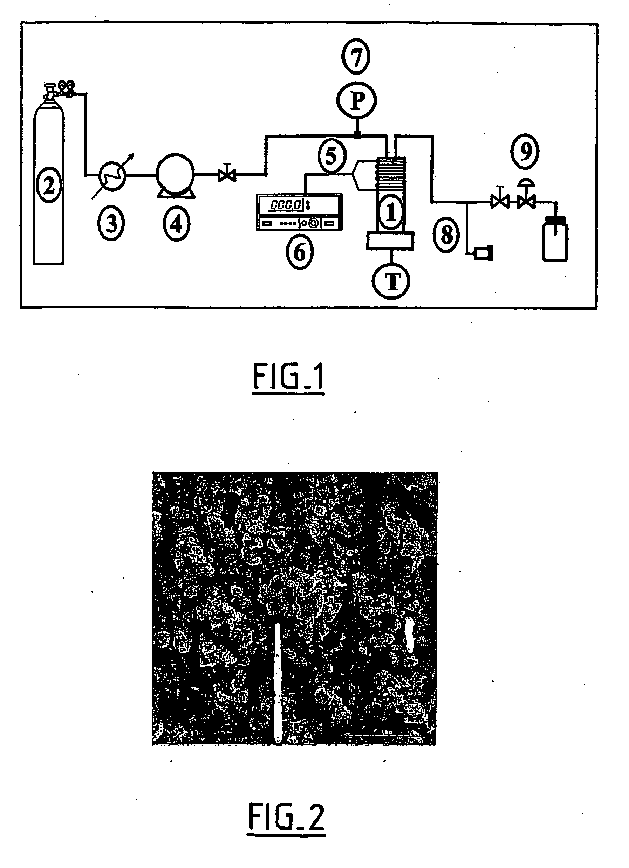

L'installation de la figure 1 permet de synthétiser des particules de Ba_{0,6}Sr_{0,4}TiO₃ (BST) micrométriques enrobées d'une couche nanostructurée d'alumine Al₂O₃.

L'installation comprend les éléments suivants :
- un réacteur de dépôt 1 présentant un volume intérieur de 26,5 cm³,
- une bonbonne 2 contenant du solvant sous forme de dioxyde de carbone CO₂, et relié par un conduit d'alimentation au réacteur 1,
- un cryostat 3 permettant de réguler la température du CO₂ injecté par une pompe haute pression 4 alimentant le réacteur 1,
- la pompe haute pression 4,
- un enroulement chauffant 5 disposé autour du réacteur de dépôt 1,
- un appareil de régulation 6 de l'élément chauffant 5,
- un capteur de pression 7 permettant de mesurer la pression dans le réacteur de dépôt 1,
- un organe de sécurité 8 sous la forme d'un disque de rupture apte à libérer la pression en cas de montée trop importante de la pression dans le réacteur,
- une vanne 9 de dépressurisation du réacteur 1.

La poudre micrométrique de BST destinée à être enrobée peut être observée sur la figure 2. Un mélange contenant 300 mg de poudre de BST obtenu par voie céramique, 240 mg d'acétylacétonate d'aluminium et 4,5 mL d'éthanol absolu CH₃CH₂OH est introduit dans le réacteur de dépôt 1. La pompe haute pression 4 est ensuite activée de manière à faire pénétrer dans le réacteur de dépôt 1 du CO₂ en provenance de la bonbonne 2 de manière à obtenir une proportion de CO₂/CH₃CH₂OH de 80/20 molaire dans le réacteur. Le CO₂ est maintenu à une température de 20°C par le cryostat 3.

Le réacteur est ensuite chauffé jusqu'à une température de 200°C par l'enroulement chauffant 5, la température de l'élément chauffant étant régulée par appareil de régulation 6. Le chauffage à 200°C induit une augmentation de la pression dans le réacteur de dépôt 1. La pression mesurée par le capteur de pression 7 est sensiblement égale à 20MPa.

Le mélange réactionnel est maintenu dans ces conditions de température et de pression supercritiques pendant environ 1 heure.

On notera que l'enroulement chauffant 5 est disposé contre la partie supérieure du corps du réacteur 1 de manière à générer dans le réacteur un gradient de température et ainsi une mise en mouvement des particules de BST à enrober.

Le réacteur de dépôt est ensuite dépressurisé jusqu'à la pression atmosphérique par actionnement de la vanne 9, le réacteur étant maintenu à la température de 200°C pendant la dépressurisation. Le réacteur est ensuite refroidi à température ambiante.

La dépressurisation du réacteur conduit à une extraction totale du solvant.

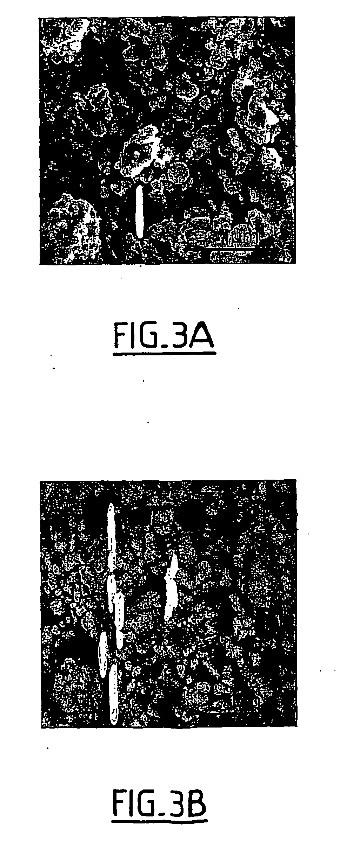

Le matériau contenu dans le réacteur est alors constitué d'une poudre sèche et propre (qui peut être observée sur les figures 3A et 3B) comprenant deux types de particules :
- une population de particules de type I constituée de particules sphériques d'alumine,
- une population de particules de type II constituée par des grains de BST enrobés d'alumine.

La détermination de la nature de ces deux types de particules a été validée par spectroscopie Auger. La décomposition de l'acétylacétonate d'aluminium précurseur induit la croissance de nanoparticules d'alumine (dimensions d'environ 5 à 200 nm) qui s'agrègent en particules sphériques d'alumine nanostructurées (formant ainsi les particules de type I) ou se déposent à la surface des particules de BST sous forme d'une couche nanostructurée (particules de type II).

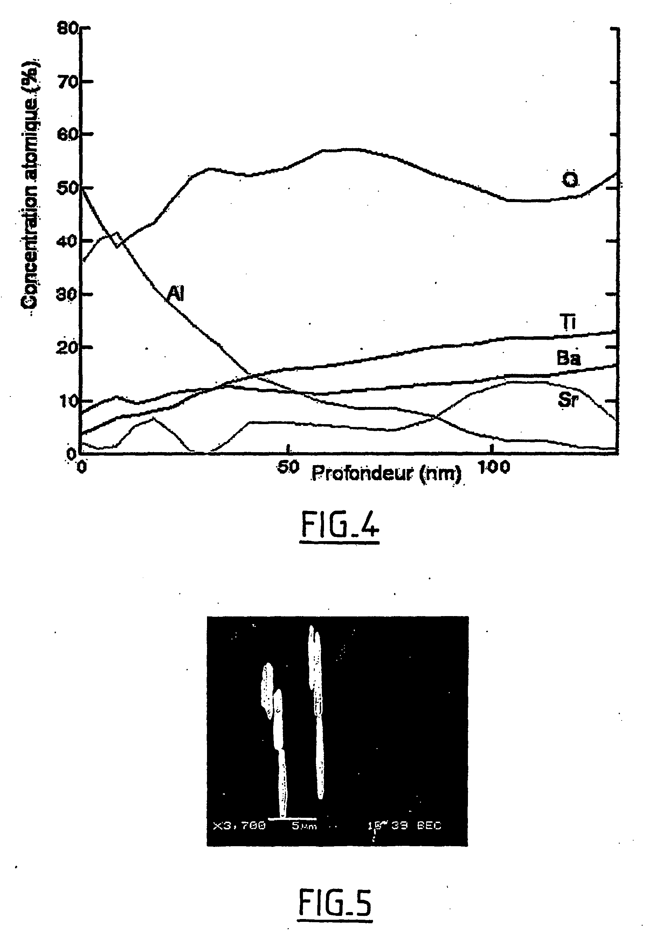

La figure 4 représente le profil de composition chimique d'une particule de BST enrobée d'alumine (particule de type II).

La poudre contenant les particules de BST enrobées est mise en forme par pressage uniaxial à 100 MPa pendant 1 minute et frittage à 1400°C pendant 2 heures, ce qui conduit à la formation d'un matériau composite ferroélectrique BST/alumine.

La figure 5 montre que le matériau composite obtenu est dense et constitué de grains de BST (zones claires) isolés les uns des autres par de l'alumine (zones foncées). La couche nanostructurée d'alumine empêche la croissance des grains de BST durant le frittage. En outre, les particules d'alumine nanostructurées libèrent des particules de petite taille qui viennent combler les espaces entre les grains de BST. Il s'ensuit que la structure du matériau composite obtenu est particulièrement dense et présente peu de vides. Le fait que l'alumine se présente sous forme nanostructurée permet de diminuer la température de frittage (1400°C) par rapport à la température classique de frittage de l'alumine (1600°C).

Le contrôle des conditions de l'étape d'enrobage des particules de BST en milieu fluide supercritique permet de déterminer avec précision la structure du matériau composite final BST/alumine et notamment l'épaisseur de la couche d'enrobage d'alumine.

Les paramètres de l'étape d'enrobage sous fluide supercritique pouvant être modifiés pour ajuster les caractéristiques structurelles du matériau composite sont les suivants :
- pression dans le réacteur,
- température d'enrobage,
- concentration-en-précurseur,
- temps de séjour dans le réacteur,
- nature du solvant supercritique,
- ajout d'un co-solvant.

Ces paramètres peuvent être ajustés pour contrôler les caractéristiques du coeur de BST des particules enrobées (taille du coeur, morphologie, composition chimique, etc.), les caractéristiques de la coque d'alumine (caractéristiques de la nanostructure, composition chimique, etc.). Un tel ajustement des paramètres n'était pas possible avec les techniques d'enrobage de l'art antérieur.

L'étape de frittage influe également sur la structure finale du matériau composite. Les paramètres déterminants sont :
- la pression de frittage,
- la température de frittage,
- la durée de frittage.

Ces paramètres peuvent également être ajustés pour contrôler la cohésion de l'ensemble.

Les caractéristiques diélectriques de ce matériau composite déterminées par mesure d'impédance ont été comparées aux caractéristiques d'une céramique de BST ne contenant pas d'alumine frittée pendant 2 heures à 1400°C. Une amélioration des propriétés diélectriques du matériau BST/Al₂O₃ peut être constatée par rapport au matériau BST seul. Ainsi, on observe :
- un élargissement du pic de permittivité et par conséquent une diminution de la sensibilité thermique du matériau sans déplacement du maximum de permittivité,
- de faibles pertes diélectriques tanδ,
- une conservation des propriétés électriques jusqu'à des fréquences de quelques gigahertz, notamment ferroélectrique et non-linéaire de la poudre initiale de BST enrobé d'alumine,
- une accordabilité indépendante de la fréquence (pour une fréquence comprise sensiblement entre 100 hertz et 1 gigahertz) et un coefficient de pertes diélectriques tanδ indépendant du champ électrique appliqué au matériau.

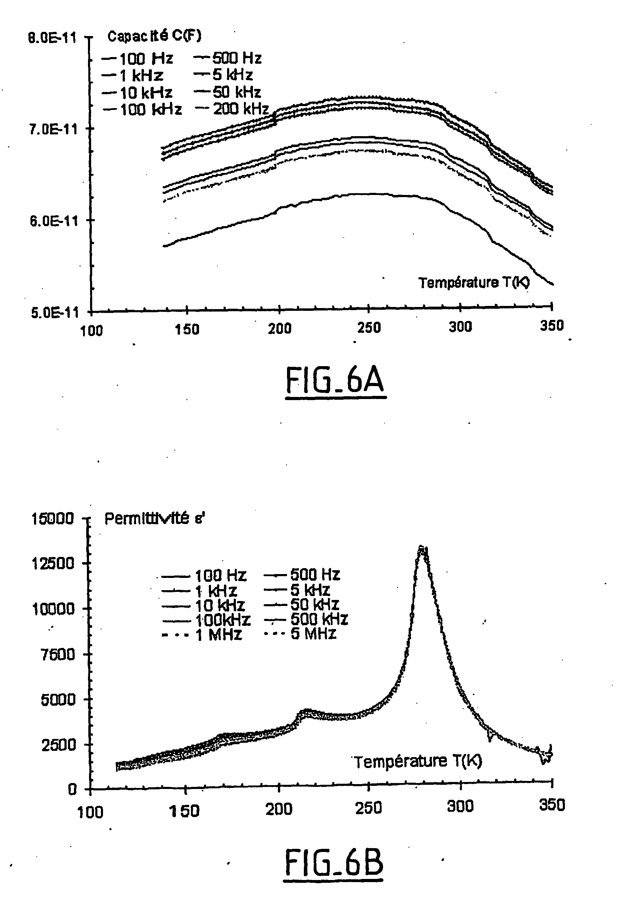

La figure 6A représente l'évolution de la capacité C de particules de BST enrobées avant frittage en fonction de la fréquence qui leur est appliquée. La figure 6B représente l'évolution de la permittivité ε' de la céramique de BST ne contenant pas d'alumine en fonction de la fréquence qui lui est appliquée. La poudre de BST enrobée, avant frittage, présente un maximum de capacité à 250K environ, quelque soit la fréquence qui lui est appliquée (figure 6A). La céramique de BST sans addition d'alumine présente une permittivité maximale à 285K (figure 6B). La permittivité mesurée présente un pic très fin centré sur la température de Curie correspondant à la transition paraélectrique/ferroélectrique du BST.

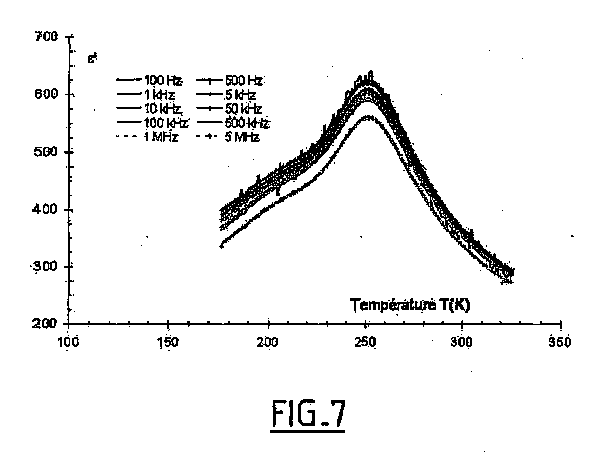

Le matériau composite BST/alumine fritté (figure 7) présente un maximum de permittivité (ou de capacité) à la même température (250K) que la poudre de BST non frittée (figure 6), ce qui permet de mettre en évidence le fait que l'alumine empêche la croissance des grains de BST. Un second pic de permittivité observé à la température de 215K correspondant à la transition tétragonal/orthorombique du BST se retrouve également pour la poudre non frittée et pour le matériau composite BST/alumine fritté.

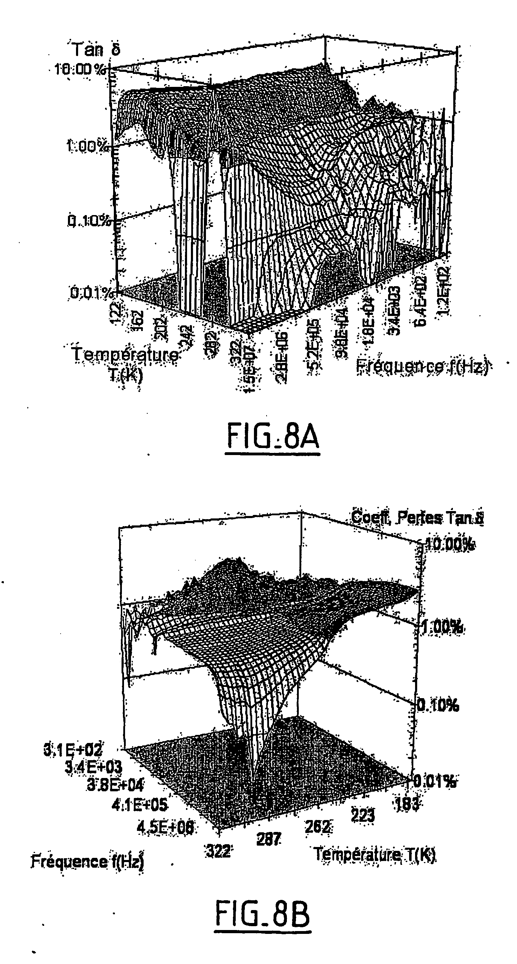

Une comparaison des figures 8A et 8B permet de mettre en évidence l'amélioration apportée par le matériau composite BST/alumine par rapport à une céramique de BST sans addition d'alumine, en terme de pertes diélectriques. La figure 8A représente les variations du coefficient de perte diélectrique tanδ pour une céramique classique de BST en fonction de la température et de la fréquence appliquée. La figure 8B représente les variations du coefficient de perte diélectrique tanδ pour le matériau composite BST/alumine fritté. Contrairement à une céramique de BST classique, le coefficient de pertes diélectriques tanδ du matériau composite BST/alumine varie peu en fonction de la température et de la fréquence. En outre, on peut observer sur la figure 8B, que le coefficient de perte est inférieur à 1% (limite requise pour les applications microélectroniques) sur une large zone de température et de fréquence (zone représentée en clair) et reste proche de cette limite (il atteint au maximum 2,5%) en dehors de cette zone (zone représentée en foncé).

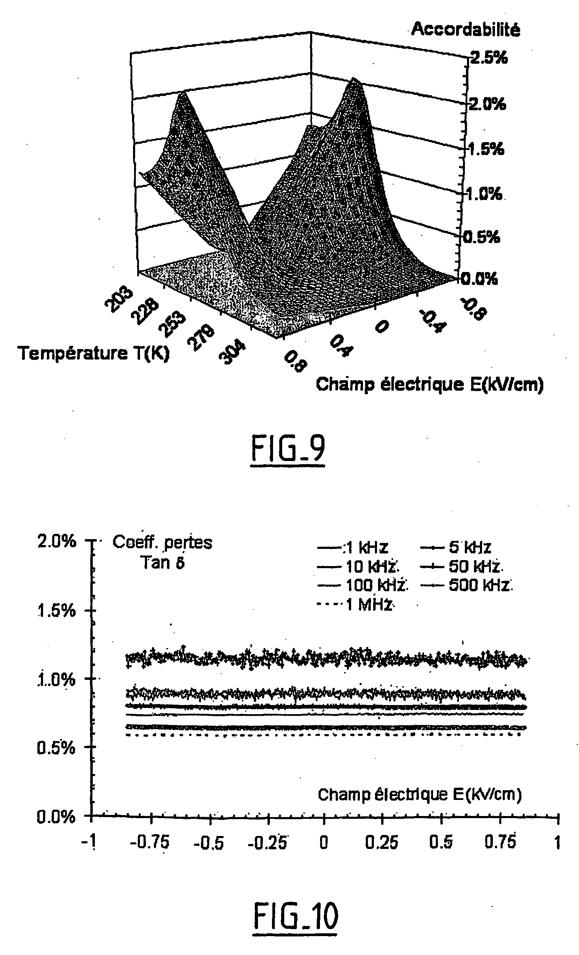

La figure 9 représente les variations de l'accordabilité du matériau composite BST/alumine fritté en fonction de la température et du champ électrique appliqué, pour une fréquence de 100 kHz. L'accordabilité est définie comme la variation relative de la permittivité en fonction du champ appliqué. On observe sur cette figure que les propriétés non linéaires du BST sont également conservées dans le matériau BST/alumine fritté.

L'accordabilité du matériau composite BST/alumine atteint 2% à la température du maximum de permittivité (température de Curie) pour un champ électrique modeste de 0,8 kV/cm.

La figure 10 représente les variations du coefficient de pertes diélectriques tanδ du matériau composite BST/alumine en fonction du champ électrique appliqué au matériau, pour différentes fréquences de ce champ. Les mesures réalisées à 300K montrent que l'accordabilité est indépendante de la fréquence du champ pour des fréquences comprises entre 100 Hz et 1 MHz et que les pertes diélectriques ne dépendent pas du champ électrique appliqué.

## Revendications

1. Procédé d'obtention d'un matériau composite ferroélectrique, comprenant les étapes consistant à :
- enrober des particules d'un composé ferroélectrique d'une couche d'un composé diélectrique,
- former un matériau composite dense par frittage des particules enrobées,
**caractérisé en ce que** l'étape d'enrobage comprend une mise en contact les particules du composé ferroélectrique avec un fluide contenant au moins un solvant et un précurseur du composé diélectrique, le fluide étant maintenu, à des conditions de température et de pression supercritiques.

2. Procédé selon la revendication 1, **caractérisé en ce que** le fluide est maintenu à une température supérieure à 10°C.

3. Procédé selon l'une des revendications qui précèdent, **caractérisé en ce qu'**il comprend en outre une étape préalable de synthèse des particules de composé ferroélectrique, cette synthèse étant réalisée sous pression.

4. Procédé selon la revendication 3, **caractérisé en ce que** la synthèse des particules est réalisée à une température supérieure à 10°C.

5. Procédé selon l'une des revendications 3 ou 4, **caractérisé en ce que** la synthèse est réalisée dans des conditions de température et de pression supercritiques.

6. Procédé selon l'une des revendications qui précèdent, **caractérisé en ce que**l le composé ferroélectrique est choisi parmi les matériaux suivantes : PbTiO₃, PZT, PMN, LiNbO₃, KNbO₃, KTN, BaTᵢO₃, BaTiO₃-SrTiO₈.

7. Procédé selon l'une des revendications 1 à 6, **caractérisé en ce que** le composé ferroélectrique est du BaₓSr₁₋ₓTiO₃ ou BaTᵢO₃.

8. Procédé selon l'une des revendications qui précèdent, caractéris2 en ce que le composé diélectrique est choisi parmi les oxydes ou les nitrures.

9. Procédé selon la revendication 8, **caractérisé en ce que** le composé diélectrique est choisi parmi les oxydes suivants : Al₂O₃, SiO₂, TiO₂, MgTiO₃, ZrO₂, HfO₂, SnO₂, SnO₃, Ta₂O₅.

10. Procédé selon l'une des revendications qui précèdent, **caractérisé en ce que** le précurseur du matériau diélectrique est choisi dans la famille des sels, des complexes métalliques et organométalliques, notamment dans la famille des acétates, acétyle acétonates ou alcoxydes.

11. Procédé selon l'une des revendications qui précèdent, **caractérisé en ce que** le solvant comprend du CO₂ où du NH₃

12. Procédé selon l'une des revendications 1 à 11, **caractérisé en ce que** le solvant est choisi parmi les alcools, l'eau ou leur mélange.

13. Procédé selon l'une des revendications qui précèdent, **caractérisé en ce que** les particules de composé ferroélectrique présentent des dimensions de l'ordre de 5 nm à 1 µm.

14. Procédé selon l'une des revendications qui précèdent, **caractérisé en ce que** la couche de composé diélectrique d'enrobage présente une épaisseur de l'ordre de 1nm à 10 µm.

## Claims

1. Method for obtaining a ferroelectric composite, comprising the steps consisting in:
- coating particles of a ferroelectric with a layer of a dielectric; and
- forming a dense composite by sintering the coated particles,
**characterized in that** the coating step comprises bringing the particles of the ferroelectric into contact with a fluid containing at least one solvent and a precursor of the dielectric, the fluid being maintained under supercritical temperature and pressure conditions.

2. Method according to Claim 1, **characterized in that** the fluid is maintained at a temperature above 10°C.

3. Method according to either of the preceding claims, **characterized in that** it further includes a prior step of synthesizing the ferroelectric particles, this synthesis being carried out under pressure.

4. Method according to Claim 3, **characterized in that** the synthesis of the particles is carried out at a temperature above 10°C.

5. Method according to either of Claims 3 and 4, **characterized in that** the synthesis is carried out under supercritical temperature and pressure conditions.

6. Method according to one of the preceding claims, **characterized in that** the ferroelectric is chosen from the following materials: PbTiO₃, PZT, PMN, LiNbO₃, KNbO₃, KTN, BaTᵢO₃ and BaTiO₃-SrTiO₃.

7. Method according to one of Claims 1 to 6, **characterized in that** the ferroelectric is BaₓSr₁₋ₓTiO₃ or BaTiO₃.

8. Method according to one of the preceding claims, **characterized in that** the dielectric is chosen from oxides or nitrides.

9. Method according to Claim 8, **characterized in that** the dielectric is chosen from the following oxides: Al₂O₃, SiO₂, TiO₂, MgTiO₃, ZrO₂, HfO₂, SnO₂, SnO₃ and Ta₂O₅.

10. Method according to one of the preceding claims, **characterized in that** the precursor of the dielectric is chosen from the family of salts, metal and organometallic complexes, especially from the family of acetates, acetylacetonates or alkoxides.

11. Method according to one of the preceding claims, **characterized in that** the solvent comprises CO₂ or NH₃.

12. Method according to one of Claims 1 to 11, **characterized in that** the solvent is chosen from alcohols, water or a mixture thereof.

13. Method according to one of the preceding claims, **characterized in that** the ferroelectric particles have dimensions of around 5 nm to 1 µm.

14. Method according to one of the preceding claims, **characterized in that** the dielectric coating layer has a thickness of around 1 nm to 10 µm.

## Patentansprüche

1. Verfahren zum Erhalt eines ferroelektrischen Verbundwerkstoffs, umfassend die Schritte bestehend aus:
- Umhüllen der Partikel einer ferroelektrischen Verbindung mit einer Schicht einer dielektrischen Verbindung,
- Bilden eines dichten Verbundwerkstoffs durch Sintern der umhüllten Partikel,
**dadurch gekennzeichnet, dass** der Schritt des Umhüllens ein In-Kontakt-Bringen der Partikel der ferroelektrischen Verbindung mit einem Fluid umfasst, enthaltend mindestens eine Lösemittel und einen Vorläufer der dielektrischen Verbindung, wobei das Fluid unter superkritischen Temperatur- und Druckbedingungen gehalten wird.

2. Verfahren nach Anspruch 1, **dadurch gekennzeichnet, dass** das Fluid bei einer Temperatur über 10 °C gehalten wird.

3. Verfahren nach einem der vorhergehenden Ansprüche, **dadurch gekennzeichnet, dass** es außerdem einen vorherigen Schritt der Synthese der Partikel der ferroelektrischen Verbindung umfasst, wobei diese Synthese unter Druck durchgeführt wird.

4. Verfahren nach Anspruch 3, **dadurch gekennzeichnet, dass** die Synthese der Partikel bei einer Temperatur über 10 °C durchgeführt wird.

5. Verfahren nach einem der Ansprüche 3 oder 4, **dadurch gekennzeichnet, dass** die Synthese unter superkritischen Temperatur- und Druckbedingungen durchgeführt wird.

6. Verfahren nach einem der vorhergehenden Ansprüche, **dadurch gekennzeichnet, dass** die ferroelektrische Verbindung unter den folgenden Materialien gewählt wird: PbTiO₃, PZT, PMN, LiNbO₃, KNbO₃, KTN, BaT₁O₃, BaT₁O₃-SrTiO₃.

7. Verfahren nach einem der Ansprüche 1 bis 6, **dadurch gekennzeichnet, dass** die ferroelektrische Verbindung BaₓSr1ₓTiO₃ oder BaT;O₃ ist.

8. Verfahren nach einem der vorhergehenden Ansprüche, **dadurch gekennzeichnet, dass** die dielektrische Verbindung unter den Oxiden oder den Nitriden gewählt wird.

9. Verfahren nach Anspruch 8, **dadurch gekennzeichnet, dass** die dielektrische Verbindung unter den folgenden Oxiden gewählt wird: Al₂O₃. SiO₂, TiO₂, MgTiO₃, ZrO₂, HfO₂, SnO₂, SnO₃, Ta₂O₅.

10. Verfahren nach einem der vorhergehenden Anspruche, **dadurch gekennzeichnet, dass** der Vorläufer des dielektrischen Materials aus der Familie der Salze, der metall- und metallorganischen Komplexe, insbesondere aus der Familie der Acetate, Acetylacetonate oder Alkoxide gewählt wird

11. Verfahren nach einem der vorhergehenden Ansprüche, **dadurch gekennzeichnet, dass** das Lösemittel CO₂ oder NH₃ umfasst.

12. Verfahren nach einem der Ansprüche 1 bis 11, **dadurch gekennzeichnet, dass** das Lösemittel unter den Alkoholen, Wasser oder ihrer Mischung gewählt wird.

13. Verfahren nach einem der vorhergehenden Ansprüche, **dadurch gekennzeichnet, dass** die Partikel der ferroelektrischen Zusammensetzung Abmessungen aufweisen, die im Bereich von 5 nm bis 1 µm liegen.

14. Verfahren nach einem der vorhergehenden Ansprüche, **dadurch gekennzeichnet, dass** die Schicht der dielektrischen Verbindung der Umhüllung eine Dicke im Bereich von 1 nm bis 1 µm aufweist.
